# FASCICULE DE BREVET EUROPEEN

(11) **EP 4 295 730 B1**
(45) Date de publication et mention de la délivrance du brevet: **16.04.2025**
(21) Numéro de dépôt: 23178575.9
(22) Date de dépôt: 12.06.2023
(51) Int. Cl.: A47J 31/44

(54) **DISPOSITIF DE MOUSSAGE DE LAIT POURVU D'UN SYSTÈME DE MAINTIEN OPTIMISÉ**
MILCHSCHÄUMVORRICHTUNG MIT OPTIMIERTEM HALTESYSTEM
MILK FOAMING DEVICE WITH OPTIMIZED HOLDING SYSTEM

(30) Priorité: 14.06.2022 FR 2205746
(43) Date de publication de la demande: 27.12.2023
(73) Titulaire: SEB S.A., 69130 Ecully (FR)
(72) Inventeur: MORIN, Gilles, 69134 ECULLY CEDEX (FR); DOS SANTOS, Quentin, 69134 ECULLY CEDEX (FR)
(74) Mandataire: Germain Maureau

(56) Documents cités:
- EP-B1- 3 720 323
- US-A1- 2015 196 160

## Description

### Domaine technique

La présente invention concerne le domaine des machines à café automatiques, et plus particulièrement le domaine des dispositifs de moussage de lait destinés à coopérer avec des machines à café automatiques.

### Etat de la technique

Le document WO2005/063093 divulgue un dispositif de moussage de lait comportant :
- une partie de mélange comprenant une chambre de mélange munie d'un orifice de sortie, un orifice d'entrée de vapeur, un conduit d'écoulement principal reliant l'orifice d'entrée de vapeur à la chambre de mélange, un conduit d'amenée de lait relié au conduit d'écoulement principal et un conduit d'amenée d'air relié au conduit d'écoulement principal,
- une partie de fermeture mobile par rapport à la partie de mélange entre une position de fermeture dans laquelle la partie de fermeture ferme la chambre de mélange et le conduit d'écoulement principal et une position d'ouverture dans laquelle la chambre de mélange et le conduit d'écoulement principal sont ouverts et accessibles pour être nettoyés,
- un joint d'étanchéité agencé à une zone de jonction entre la partie de mélange et la partie de fermeture et s'étendant autour de la chambre de mélange et du conduit d'écoulement principal, et
- un système de maintien configuré pour maintenir la partie de fermeture en position de fermeture.

Le conduit d'écoulement principal est plus particulièrement configuré de telle sorte qu'un écoulement de vapeur dans le conduit d'écoulement principal depuis l'orifice d'entrée de vapeur et jusque la chambre de mélange génère une dépression dans le conduit d'amenée de lait et une dépression dans le conduit d'amenée d'air et entraîne une aspiration de lait et d'air dans le conduit d'écoulement principal.

La configuration particulière du dispositif de moussage de lait décrit dans le document WO2005/063093, et plus particulièrement de la partie de mélange et de la partie de fermeture, permet un nettoyage aisé du dispositif de moussage de lait.

Toutefois, l'assemblage de la partie de mélange et de la partie de fermeture du dispositif de moussage de lait décrit dans le document WO2005/063093 requiert l'insertion d'un organe de fixation saillant, prévue sur une portion arrière de la partie de fermeture, dans une rainure de fixation prévue sur la partie de mélange, un pivotement d'une portion avant de la partie de fermeture en direction de la partie de mélange et enfin le déplacement d'un organe de verrouillage, prévu sur la portion avant de la partie de fermeture, dans une position de verrouillage. Or, une telle cinétique d'assemblage des parties de mélange et de fermeture induit des déformations hétérogènes du joint d'étanchéité qui sont d'une part susceptibles de nuire à l'intégrité du joint d'étanchéité et donc d'induire, dans le temps, des fuites de fluide au niveau de la zone de jonction, et d'autre part d'altérer la géométrie de la chambre de mélange et du conduit d'écoulement principal et donc d'empêcher l'obtention d'une mousse de lait ayant la consistance souhaitée.

Un dispositif de moussage de lait destiné a coopérer avec une machine à café automatique est décrit dans le document EP3720323.

### Résumé de l'invention

La présente invention vise à remédier à tout ou partie de ces inconvénients.

Le problème technique à la base de l'invention consiste notamment à fournir un dispositif de moussage de lait qui puisse être démonté et nettoyé aisément et qui présente une structure fiable et étanche, tout en garantissant l'obtention d'une mousse de lait ayant une consistance appropriée.

A cet effet, la présente invention concerne un dispositif de moussage de lait destiné à coopérer avec une machine à café automatique, le dispositif de moussage de lait comportant :
- une partie de mélange comprenant une chambre de mélange munie d'un orifice de sortie, un orifice d'entrée d'eau chaude/vapeur et un conduit d'écoulement principal reliant l'orifice d'entrée d'eau chaude/vapeur à la chambre de mélange,
- une partie de fermeture mobile par rapport à la partie de mélange entre une position de fermeture dans laquelle la partie de fermeture ferme la chambre de mélange et le conduit d'écoulement principal et une position d'ouverture dans laquelle la chambre de mélange et le conduit d'écoulement principal sont ouverts et accessibles pour être nettoyés,
- un conduit d'amenée de lait relié au conduit d'écoulement principal,
- un joint d'étanchéité agencé à une zone de jonction entre la partie de mélange et la partie de fermeture et s'étendant autour de la chambre de mélange et du conduit d'écoulement principal, et
- un système de maintien configuré pour maintenir la partie de fermeture en position de fermeture.

La partie de fermeture est configurée pour occuper une position intermédiaire située entre la position de fermeture et la position d'ouverture et dans laquelle la partie de fermeture est située en regard de la chambre de mélange et du conduit d'écoulement principal et est espacée de la partie de mélange, et le système de maintien est configuré pour conférer à la partie de fermeture qu'un seul degré de liberté en translation selon une direction de translation lorsque la partie de fermeture est déplacée entre la position intermédiaire et la position de fermeture, le système de maintien étant en outre configuré pour assurer une compression du joint d'étanchéité lorsque la partie de fermeture est en position de fermeture.

Une telle configuration du système de maintien permet notamment d'éviter une rotation ou un pivotement de la partie de fermeture par rapport à la partie de mélange lors du déplacement de la partie de fermeture de la position intermédiaire vers la position de fermeture, et donc d'assurer une compression axiale et uniforme du joint d'étanchéité lorsque la partie de fermeture occupe la position de fermeture. Ainsi, le système de maintien selon la présente invention permet de préserver l'intégrité du joint d'étanchéité, et de limiter les risques de fuite de fluide au niveau de la zone de jonction.

De plus, une telle configuration du système de maintien permet d'éviter une éventuelle inclinaison de la partie de fermeture par rapport à la partie de mélange lorsque la partie de fermeture est en position de fermeture, et donc de garantir la géométrie de la chambre de mélange et du conduit d'écoulement principal. De ce fait, le système de maintien selon la présente invention permet également de garantir l'admission d'une quantité de lait prédéterminée dans la chambre de mélange, et donc l'obtention d'une mousse de lait ayant une consistance appropriée.

Le dispositif de moussage de lait peut en outre présenter une ou plusieurs des caractéristiques suivantes, prises seules ou en combinaison.

Selon un mode de réalisation de l'invention, le système de maintien est configuré pour plaquer la partie de fermeture contre la partie de mélange lorsque la partie de fermeture est en position de fermeture, de manière à comprimer le joint d'étanchéité, et plus particulièrement une lèvre d'étanchéité du joint d'étanchéité.

Selon un mode de réalisation de l'invention, le système de maintien comporte un premier organe de guidage et un deuxième organe de guidage solidaires respectivement de la partie de mélange et de la partie de fermeture et configurés pour être montés coulissants l'un dans l'autre, les premier et deuxième organes de guidage étant configurés pour guider en translation la partie de fermeture par rapport à la partie de mélange et selon la direction de translation lorsque la partie de fermeture est déplacée entre la position intermédiaire et la position de fermeture. Une telle configuration du système de maintien permet d'assurer un guidage en translation de la partie de fermeture tout en conservant un système de maintien de structure simple.

Selon un mode de réalisation de l'invention, l'un des premier et deuxième organes de guidage est un organe de guidage en creux, et l'autre des premier et deuxième organes de guidage est un organe de guidage saillant.

Selon un mode de réalisation de l'invention, l'organe de guidage saillant fait saillie vers le bas depuis une face inférieure de la partie de fermeture.

Selon un mode de réalisation de l'invention, le système de maintien comporte une partie de verrouillage, tel qu'une bague de verrouillage, montée mobile entre une position de libération dans laquelle la partie de verrouillage autorise un déplacement de la partie de fermeture vers la position d'ouverture et une position de verrouillage dans laquelle la partie de verrouillage empêche un déplacement de la partie de fermeture vers la position d'ouverture. Une telle configuration du système de maintien permet à un utilisateur de pouvoir aisément immobiliser la partie de fermeture en position de fermeture.

Selon un mode de réalisation de l'invention, le système de maintien est configuré pour déplacer la partie de fermeture de la position intermédiaire à la position de fermeture et en direction de la partie de mélange selon la direction de translation, et donc pour rapprocher la partie de mélange et la partie de fermeture l'une de l'autre, lorsque la partie de verrouillage est déplacée de la position de libération vers la position de verrouillage.

Selon un mode de réalisation de l'invention, la partie de verrouillage est annulaire et est mobile en rotation par rapport à la partie de fermeture autour d'un axe de rotation et entre la position de libération et la position de verrouillage, l'axe de rotation étant configuré pour être sensiblement parallèle à la direction de translation lorsque la partie de fermeture occupe la position intermédiaire. Une telle configuration du système de maintien permet à un utilisateur de pouvoir aisément immobiliser la partie de fermeture en position de fermeture par une simple rotation de la partie de verrouillage.

Selon un mode de réalisation de l'invention, la partie de verrouillage comporte au moins un organe de fixation, tel qu'une rampe de fixation, configuré pour coopérer avec au moins un élément de fixation, tel qu'un ergot de fixation, configuré pour être solidaire en rotation de la partie de mélange, l'au moins un organe de fixation étant configuré pour coopérer avec l'au moins un élément de fixation lors d'une rotation de la partie de verrouillage de la position de libération vers la position de verrouillage de manière à déplacer la partie de verrouillage selon la direction de translation et en direction de la partie de mélange, la partie de verrouillage étant configurée pour déplacer la partie de fermeture vers la partie de mélange et selon la direction de translation lors d'une rotation de la partie de verrouillage de la position de libération vers la position de verrouillage.

Selon un mode de réalisation de l'invention, la partie de verrouillage comporte une face d'appui qui s'étend transversalement à la direction de translation, ladite face d'appui étant configurée pour déplacer la partie de fermeture vers la partie de mélange et selon la direction de translation lors d'une rotation de la partie de verrouillage de la position de libération vers la position de verrouillage. Une telle configuration de la partie de verrouillage permet d'assurer une compression uniforme du joint d'étanchéité.

Selon un mode de réalisation de l'invention, la face d'appui est configurée pour glisser sur la partie de fermeture lors d'une rotation de la partie de verrouillage de la position de libération vers la position de verrouillage.

Selon un mode de réalisation de l'invention, la partie de verrouillage et la partie de fermeture forment un sous ensemble. Ces dispositions assurent une manipulation aisée de la partie de fermeture et un assemblage aisé de la partie de fermeture sur la partie de mélange.

Selon un mode de réalisation de l'invention, la partie de verrouillage est montée de manière imperdable sur la partie de fermeture.

Selon un mode de réalisation de l'invention, la zone de jonction est plane, et la direction de translation est sensiblement perpendiculaire à la zone de jonction.

Une telle configuration du dispositif de moussage de lait selon la présente invention permet un assemblage aisé du dispositif de moussage de lait, tout en assurant une compression optimale du joint d'étanchéité.

Selon un mode de réalisation de l'invention, le dispositif de moussage de lait comporte un dispositif de limitation de course angulaire configuré pour limiter une course angulaire de la partie de verrouillage par rapport à la partie de fermeture. Ces dispositions permettent à un utilisateur de pouvoir aisément déplacer la partie de verrouillage entre la position de libération et la position de verrouillage.

Selon un mode de réalisation de l'invention, le dispositif de limitation de course angulaire comporte une première butée de fin course configurée pour empêcher une rotation de la partie de verrouillage, dans un premier sens de rotation, au-delà de la position de libération, et une deuxième butée de fin de course configurée pour empêcher une rotation de la partie de verrouillage, dans un deuxième sens de rotation, au-delà de la position de verrouillage.

Selon un mode de réalisation de l'invention, le dispositif de moussage de lait comporte un conduit d'amenée d'air relié au conduit d'écoulement principal.

Selon un mode de réalisation de l'invention, le conduit d'écoulement principal comporte une restriction de section formant un système d'aspiration de lait et d'air basé sur l'effet venturi. Une telle configuration du dispositif de moussage de lait permet de contrôler la quantité d'air et la quantité de lait admises dans la chambre de mélange, sans requérir la présence de moyens d'admission complexes et onéreux.

Selon un mode de réalisation de l'invention, le conduit d'écoulement principal est configuré de telle sorte qu'un écoulement d'eau chaude/vapeur dans le conduit d'écoulement principal depuis l'orifice d'entrée d'eau chaude/vapeur et jusque la chambre de mélange génère une dépression dans le conduit d'amenée de lait et une dépression dans le conduit d'amenée d'air et entraîne une aspiration de lait et d'air dans le conduit d'écoulement principal.

Selon un mode de réalisation de l'invention, la chambre de mélange est du type cyclonique et s'étend verticalement, le conduit d'écoulement principal débouchant dans une partie supérieure de la chambre de mélange et l'orifice de sortie étant situé dans une partie inférieure de la chambre de mélange. Une telle configuration de la chambre de mélange favorise le mélange de l'air, du lait et de l'eau chaude ou de la vapeur d'eau introduits dans la chambre de mélange.

Selon un mode de réalisation de l'invention, le conduit d'écoulement principal débouche dans un point haut de la chambre de mélange et l'orifice de sortie est situé en un point bas de la chambre de mélange.

Selon un mode de réalisation de l'invention, le conduit d'écoulement principal débouche tangentiellement dans la chambre de mélange. Une telle configuration du conduit d'écoulement principal favorise le mélange de l'air, du lait et de l'eau chaude ou de la vapeur d'eau introduits dans la chambre de mélange.

Selon un mode de réalisation de l'invention, le conduit d'écoulement principal est entièrement délimité par la partie de mélange et la partie de fermeture. Ainsi, les protéines de lait, contenues dans le lait s'écoulant dans le conduit d'écoulement principal, ne sont pas susceptibles de déformer ce dernier, et donc d'avoir un impact sur la quantité d'air introduite dans la chambre de mélange.

Selon un mode de réalisation de l'invention, la partie de mélange comporte une face supérieure dans laquelle est ménagé le conduit d'écoulement principal et dans laquelle débouche la chambre de mélange.

Selon un mode de réalisation de l'invention, la partie de mélange comporte une rainure de réception qui est ménagée dans la face supérieure de la partie de mélange et dans laquelle est logé le joint d'étanchéité.

Selon un mode de réalisation de l'invention, la partie de mélange comporte une paroi d'appui qui s'étend autour de la chambre de mélange et du conduit d'écoulement principal et qui délimite en partie la rainure de réception, la paroi d'appui faisant saillie de la face supérieure de la partie de support et la partie de fermeture étant configurée pour prendre appui contre la paroi d'appui. La présence d'une telle paroi d'appui limite les risques de fuite de lait en direction du joint d'étanchéité, et donc les risques de dégradation de ce dernier par les protéines de lait contenues dans le lait s'écoulant dans le conduit d'écoulement principal.

Selon un mode de réalisation de l'invention, la partie de mélange et la partie de fermeture sont globalement circulaire et s'étendent sensiblement coaxialement lorsque la partie de fermeture occupe la position de fermeture.

Selon un mode de réalisation de l'invention, la partie de mélange comporte un canal d'admission d'air configuré pour être fermé par la partie de fermeture, le canal d'admission d'air reliant le conduit d'amenée d'air au conduit d'écoulement principal et le joint d'étanchéité s'étendant autour du canal d'admission d'air.

Selon un mode de réalisation de l'invention, le canal d'admission d'air est ménagé dans la face supérieure de la partie de mélange.

Selon un mode de réalisation de l'invention, la partie de fermeture comporte le conduit d'amenée d'air. Un tel agencement du conduit d'amenée d'air permet de limiter sensiblement les risques d'altération du conduit d'amenée d'air par les protéines de lait contenues dans le lait s'écoulant dans le conduit d'écoulement principal, et donc de garantir l'admission d'une quantité d'air maîtrisée dans la chambre de mélange.

Selon un mode de réalisation de l'invention, la partie de mélange comporte le conduit d'amenée de lait. Un tel agencement du conduit d'amenée de lait permet de limiter sensiblement les risques d'altération du conduit d'amenée de lait par les protéines de lait contenues dans le lait s'écoulant dans le conduit d'amenée de lait, et donc de garantir l'admission d'une quantité de lait maîtrisée dans la chambre de mélange.

Selon un mode de réalisation de l'invention, la partie de mélange est monobloc.

Selon un mode de réalisation de l'invention, le conduit d'amenée de lait comprend un passage d'écoulement calibré configuré pour définir un débit de lait prédéterminé dans le conduit d'amenée de lait. Ces dispositions permettent de garantir l'admission d'une quantité de lait prédéterminée dans la chambre de mélange, et donc l'obtention d'une mousse de lait ayant une consistance appropriée.

Selon un mode de réalisation de l'invention, le conduit d'amenée de lait débouche dans le conduit d'écoulement principal à proximité de la restriction de section.

Selon un mode de réalisation de l'invention, le canal d'admission d'air débouche dans le conduit d'écoulement principal à proximité de la restriction de section.

Selon un mode de réalisation de l'invention, le conduit d'écoulement principal comporte :
- une première portion de conduit qui est située en amont de la restriction de section et qui s'étend jusque la restriction de section, la première portion de conduit présentant une section de passage qui diminue en direction de la restriction de section, et
- une deuxième portion de conduit qui est située en aval de la restriction de section et qui s'étend depuis la restriction de section, la deuxième portion de conduit présentant une section de passage qui augmente en direction de la chambre de mélange.

Selon un mode de réalisation de l'invention, le conduit d'écoulement principal est configuré pour permettre un premier mélange de la vapeur, du lait et de l'air provenant respectivement de l'orifice d'entrée d'eau chaude/vapeur, du conduit d'amenée de lait et du canal d'admission d'air, avant leur arrivée dans la chambre de mélange.

Selon un mode de réalisation de l'invention, le joint d'étanchéité est continu.

Selon un mode de réalisation de l'invention, le joint d'étanchéité présente une section constante. Le joint d'étanchéité pourrait cependant présenter une section non constante pour améliorer l'étanchéité entre la partie de mélange et la partie de fermeture en cas de forte déformation de celles-ci.

Selon un mode de réalisation de l'invention, la partie de mélange comporte un conduit de déversement de lait relié fluidiquement à l'orifice de sortie de la chambre de mélange et configuré pour être situé verticalement au-dessus d'un récipient, tel qu'une tasse.

Selon un mode de réalisation de l'invention, le dispositif de moussage de lait comporte un réservoir de lait comprenant une ouverture supérieure, la partie de mélange étant agencée au niveau de l'ouverture supérieure, et est par exemple logée au moins en partie dans le réservoir de lait.

Selon un mode de réalisation de l'invention, le système de maintien est configuré pour fixer de manière amovible, c'est-à-dire de manière temporaire et réversible, la partie de mélange et la partie de fermeture au réservoir de lait.

Selon un autre mode de réalisation de l'invention, le dispositif de moussage de lait comporte un dispositif de liaison qui est distinct du système de maintien et qui est configuré pour fixer de manière amovible, c'est-à-dire de manière temporaire et réversible, la partie de mélange et la partie de fermeture au réservoir de lait.

Selon un mode de réalisation de l'invention, le dispositif de moussage de lait comporte un dispositif d'immobilisation configuré pour immobiliser en rotation la partie de mélange par rapport au réservoir de lait lorsque la partie de mélange est reçue dans le réservoir de lait.

Selon un mode de réalisation de l'invention, l'au moins un élément de fixation est prévu sur la partie de mélange et/ou sur le réservoir de lait.

Selon un mode de réalisation de l'invention, la partie de mélange comporte un corps de mélange configuré pour fermer partiellement le réservoir de lait et pour être amovible par rapport au réservoir de lait.

Selon un mode de réalisation de l'invention, le corps de mélange est pourvu d'une portion de montage tubulaire configurée pour être montée dans le réservoir de lait, et plus particulièrement pour être insérée dans le réservoir de lait via l'ouverture supérieure du réservoir de lait.

Selon un mode de réalisation de l'invention, la partie de mélange et la partie de fermeture sont configurées pour fermer le réservoir de lait et pour être amovibles par rapport au réservoir de lait. En d'autres termes, la partie de mélange et la partie de fermeture forment un couvercle configuré pour fermer le réservoir de lait.

Selon un mode de réalisation de l'invention, la partie de fermeture est configurée pour recouvrir la partie de mélange.

Selon un mode de réalisation de l'invention, le conduit d'amenée de lait comporte un tube d'aspiration de lait s'étendant verticalement et débouchant dans une partie inférieure du réservoir de lait.

Selon un mode de réalisation de l'invention, la partie de fermeture comporte une ouverture de remplissage et un volet mobile entre une position ouverte dans laquelle le volet libère au moins partiellement l'ouverture de remplissage et autorise une introduction de lait dans le réservoir de lait et une position fermée dans laquelle le volet obture au moins partiellement l'ouverture de remplissage.

Selon un mode de réalisation de l'invention, la partie de mélange comporte une ouverture de passage configurée pour être située en regard de l'ouverture de remplissage.

Selon un mode de réalisation de l'invention, l'organe de guidage en creux délimite l'ouverture de passage prévue sur la partie de mélange, et l'organe de guidage saillant est configuré pour être introduit dans ladite ouverture de passage.

Selon un mode de réalisation de l'invention, le dispositif de moussage de lait comporte en outre un dispositif de réglage de débit d'air configuré pour régler un débit d'air s'écoulant dans le conduit d'amenée d'air. Une telle configuration du dispositif de moussage de lait selon la présente invention, et plus particulièrement la présence du dispositif de réglage de débit d'air, permet à un utilisateur d'adapter la consistance de la mousse de lait obtenue en fonction de ses souhaits. L'utilisateur peut par exemple régler le débit d'air introduit dans la chambre de mélanger afin d'obtenir une mousse de lait plus ou moins ferme.

La présente invention concerne en outre une machine à café automatique comportant un embout de sortie d'eau chaude/vapeur, une chaudière produisant de l'eau chaude et/ou de la vapeur pour alimenter ledit embout de sortie d'eau chaude/vapeur, et un dispositif de moussage de lait conforme à la présente invention, l'orifice d'entrée d'eau chaude/vapeur du dispositif de moussage de lait étant relié à l'embout de sortie d'eau chaude/vapeur.

Par machine à café automatique, on comprend que la machine à café comprend notamment une chambre d'infusion qui peut être alimentée en mouture de café par un broyeur à grain incorporé dans la machine, ou une chambre d'infusion qui peut recevoir une capsule ou une dosette de café ou une chambre d'infusion formée par une cuillère destinée à être remplie de mouture de café et vidée manuellement.

### Brève description des figures

L'invention sera mieux comprise à l'aide de la description qui suit en référence aux dessins schématiques annexés représentant, à titre d'exemple non limitatif, une forme d'exécution de ce dispositif de moussage de lait .
[Fig 1] est une vue en perspective de dessus d'un dispositif de moussage de lait selon la présente invention.
[Fig 2] est une vue de dessus du dispositif de moussage de lait de la figure 1.
[Fig 3] est une vue en perspective, tronquée longitudinalement, du dispositif de moussage de lait de la figure 1.
[Fig 4] est une vue en perspective d'un joint d'étanchéité du dispositif de moussage de lait de la figure 1.
[Fig 5] est une vue partielle en perspective de dessus du dispositif de moussage de lait de la figure 1.
[Fig 6] est une vue en perspective de dessus d'une partie de mélange du dispositif de moussage de lait de la figure 1.
[Fig 7] est une vue partielle de dessus de la partie de mélange de la figure 6 équipée du joint d'étanchéité de la figure 4.
[Fig 8] est une vue partielle en perspective de dessus de la partie de mélange équipée du joint d'étanchéité de la figure 4.
[Fig 9] est une vue partielle en perspective, tronquée longitudinalement, du dispositif de moussage de lait de la figure 1.
[Fig 10] est une vue partielle en perspective, tronquée longitudinalement, de la partie de mélange de la figure 6.
[Fig 11] est une vue en perspective de dessus d'un sous-ensemble du dispositif de moussage de lait de la figure 1.
[Fig 12] est une vue en perspective de dessous du sous-ensemble de la figure 11.
[Fig 13] est une vue de dessous du sous-ensemble de la figure 11.
[Fig 14] est une vue partielle en perspective de dessus d'un dispositif de réglage de débit d'air du dispositif de moussage de lait de la figure 1.
[Fig 15] est une vue en perspective de dessus d'une partie de support et d'un organe de restriction de passage du dispositif de réglage de débit d'air de la figure 14.
[Fig 16] est une vue partielle en perspective de dessus du dispositif de réglage de débit d'air de la figure 14.
[Fig 17] est une vue en coupe de dessus du dispositif de réglage de débit d'air de la figure 14.
[Fig 18] est une vue en perspective d'une machine à café automatique équipée du dispositif de moussage de lait de la figure 1.

### Description détaillée

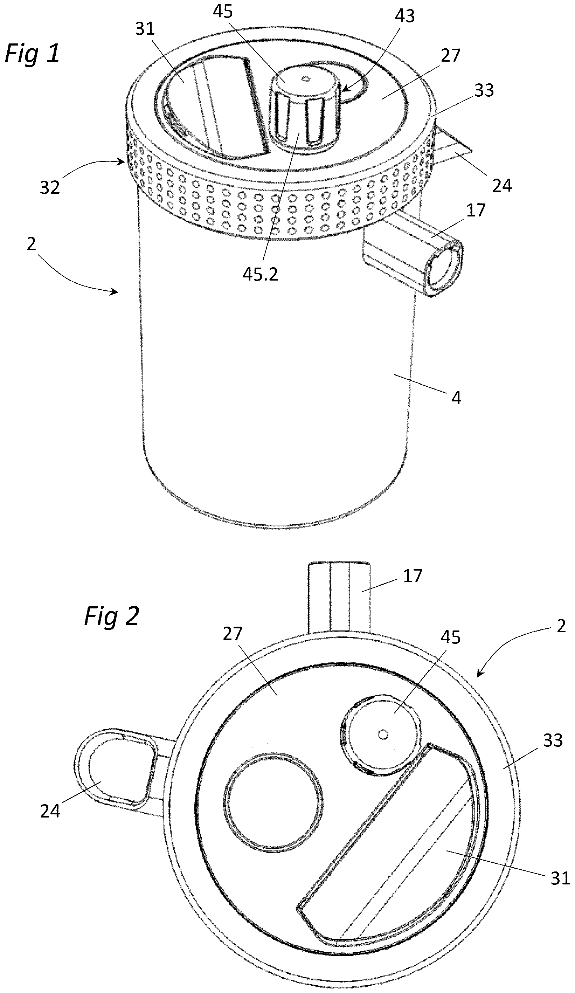

Les figures 1 à 18 représentent un dispositif de moussage de lait 2 destiné à coopérer avec une machine à café automatique 3.

Le dispositif de moussage de lait 2 comporte un réservoir de lait 4 délimitant un volume interne destiné à contenir du lait et comprenant une ouverture supérieure 5. Le réservoir de lait 4 peut par exemple avoir une forme globalement cylindrique, et présenter une section traversable circulaire. Toutefois, le réservoir de lait 4 pourrait également présenter une toute autre forme, et par exemple présenter une section traversable oblongue ou encore rectangulaire.

Le dispositif de moussage de lait 2 comporte en outre une partie de mélange 6 agencée au niveau de l'ouverture supérieure 5. La partie de mélange 6 comporte plus particulièrement un corps de mélange 7 pourvu d'une face supérieure 8 qui est globalement plane. Le corps de mélange 7 est configuré pour fermer partiellement le réservoir de lait 4 et pour être amovible par rapport au réservoir de lait 4. Le corps de mélange 7 peut par exemple comporter une portion de montage tubulaire 9 configurée pour être montée dans le réservoir de lait 4, et plus particulièrement pour être insérée dans le réservoir de lait 4 via l'ouverture supérieure 5 du réservoir de lait 4.

De façon avantageuse, le dispositif de moussage de lait 2 comporte un dispositif d'immobilisation configuré pour immobiliser en rotation le corps de mélange 7 par rapport au réservoir de lait 4 lorsque la portion de montage tubulaire 9 est reçue dans le réservoir de lait 4. Le dispositif d'immobilisation peut par exemple comporter des nervures d'immobilisation 11 prévues sur un bord périphérique supérieur du réservoir de lait 4 et répartis autour d'un axe central du réservoir de lait 4, et des rainures d'immobilisation 12 prévues sur le corps de mélange 7 et configurées pour coopérer respectivement avec les nervures d'immobilisation 11.

Le corps de mélange 7 comporte en outre une chambre de mélange 13 qui débouche dans la face supérieure 8 du corps de mélange 7 et qui est munie d'un orifice de sortie 14, et en outre un conduit d'écoulement principal 15 ménagé dans la face supérieure 8 du corps de mélange 7 et débouchant dans la chambre de mélange 13. Selon le mode de réalisation représenté sur les figures, la chambre de mélange 13 est du type cyclonique et s'étend verticalement, et le conduit d'écoulement principal 15 débouche tangentiellement dans la chambre de mélange 13. De façon avantageuse, le conduit d'écoulement principal 15 débouche dans une partie supérieure de la chambre de mélange 13, et par exemple dans un point haut de la chambre de mélange 13, et l'orifice de sortie 14 est situé dans une partie inférieure de la chambre de mélange 13, et est par exemple situé en un point bas de la chambre de mélange 13.

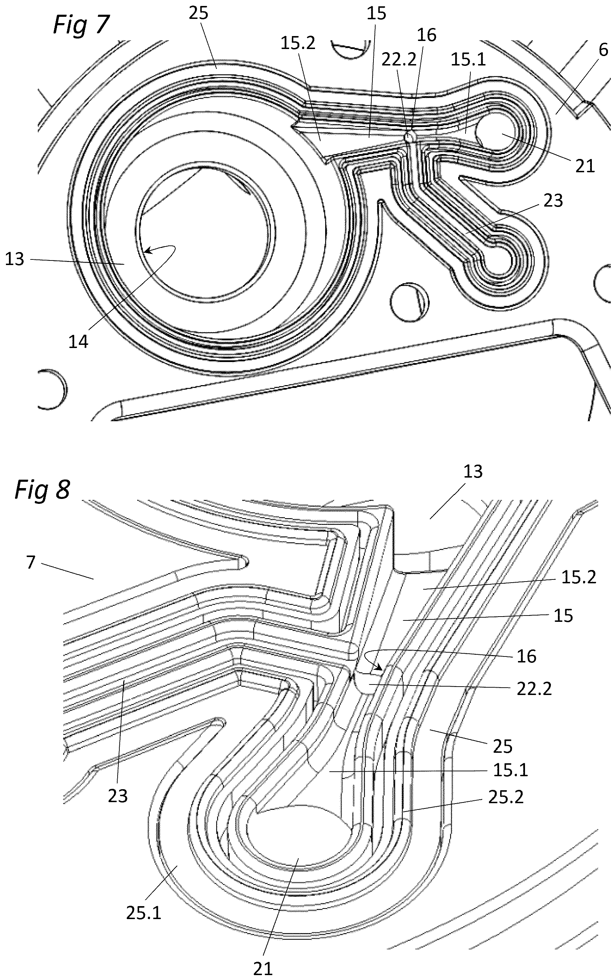

Comme montré plus particulièrement sur la figure 7, le conduit d'écoulement principal 15 comporte une restriction de section 16 située par exemple dans une portion centrale du conduit d'écoulement principal 15, une première portion de conduit 15.1 qui est située en amont de la restriction de section 16 et qui s'étend jusque la restriction de section 16, et une deuxième portion de conduit 15.2 qui est située en aval de la restriction de section 16 et qui s'étend depuis la restriction de section 16 et jusque la chambre de mélange 13. De façon avantageuse, la première portion de conduit 15.1 présente une section de passage qui diminue en direction de la restriction de section 16, et la deuxième portion de conduit 15.2 présente une section de passage qui augmente en direction de la chambre de mélange 13.

Le corps de mélange 7 comporte également un embout de raccordement 17 configuré pour être raccordé à un embout de sortie d'eau chaude/vapeur de la machine à café automatique 3, et plus particulièrement pour être relié fluidiquement à une chaudière qui équipe la machine à café automatique 3 et qui est configurée pour produire de l'eau chaude et/ou de la vapeur. De façon avantageuse, l'embout de raccordement 17 s'étend radialement par rapport à un axe central du corps de mélange 7, et est configuré pour s'étendre radialement par rapport à l'axe central du réservoir de lait 4.

Le corps de mélange 7 comporte de plus un orifice d'entrée d'eau chaude/vapeur 21 qui est relié fluidiquement à l'embout de raccordement 17 et qui débouche dans la première portion de conduit 15.1 et plus particulièrement à l'opposé de la chambre de mélange 13. Le conduit d'écoulement principal 15 est ainsi configuré pour relier fluidiquement l'orifice d'entrée d'eau chaude/vapeur 21 à la chambre de mélange 13, et pour permettre un écoulement d'eau chaude/vapeur dans le conduit d'écoulement principal 15 et jusque la chambre de mélange 13.

Le dispositif de moussage de lait 2 comporte également un conduit d'amenée de lait 22 relié fluidiquement au conduit d'écoulement principal 15, et donc configuré pour être relié fluidiquement à la chambre de mélange 13 via le conduit d'écoulement principal 15. Selon le mode de réalisation représenté sur les figures, la partie de mélange 6 comporte le conduit d'amenée de lait 22, et plus particulièrement le corps de mélange 7 et le conduit d'amenée de lait 22 sont réalisés d'un seul tenant.

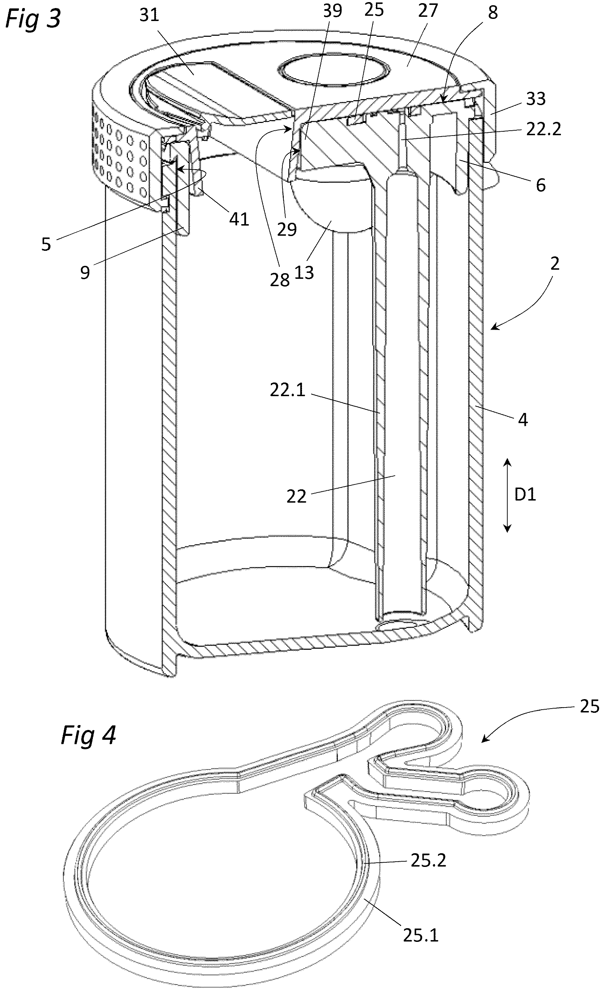

Comme montré plus particulièrement sur la figure 3, le conduit d'amenée de lait 22 comporte un tube d'aspiration de lait 22.1 s'étendant verticalement et débouchant dans une partie inférieure du réservoir de lait 4, et un passage d'écoulement calibré 22.2 situé en aval du tube d'aspiration de lait 22.1 et débouchant dans le conduit d'écoulement principal 15 au niveau de la restriction de section 16. Le passage d'écoulement calibré 22.2 est plus particulièrement configuré pour définir un débit de lait prédéterminé dans le conduit d'amenée de lait 22.

Selon le mode de réalisation représenté sur les figures, le corps de mélange 7 comporte en outre un canal d'admission d'air 23 qui est ménagé dans la face supérieure 8 du corps de mélange 7 et qui débouche dans le conduit d'écoulement principal 15 au niveau de la restriction de section 16. Le canal d'admission d'air 23 est ainsi configuré pour être relié fluidiquement à la chambre de mélange 13 via le conduit d'écoulement principal 15.

La restriction de section 16, décrite préalablement, induit une augmentation de la vitesse de la vapeur s'écoulant dans le conduit d'écoulement principal 15, ce qui génère une dépression dans le conduit d'amenée de lait 22 et dans le canal d'admission d'air 23. La restriction de section 16 est donc plus particulièrement configurée pour former un système d'aspiration de lait et d'air basé sur l'effet venturi. Le conduit d'écoulement principal 15 est ainsi configuré de telle sorte qu'un écoulement d'eau chaude/vapeur dans le conduit d'écoulement principal 15 depuis l'orifice d'entrée d'eau chaude/vapeur 21 et jusque la chambre de mélange 13 génère une dépression dans le conduit d'amenée de lait 22 et une dépression dans le canal d'admission d'air 23 et entraîne par conséquent une aspiration de lait et d'air dans le conduit d'écoulement principal 15 et écoulement du lait et de l'air aspirés jusque la chambre de mélange 13. De plus, la deuxième portion de conduit 15.2, qui présente une section de passage qui augmente en direction de la chambre de mélange 13, favorise un premier mélange de la vapeur, du lait et de l'air provenant respectivement de l'orifice d'entrée d'eau chaude/vapeur 21, du conduit d'amenée de lait 22 et du canal d'admission d'air 23, avant leur arrivée dans la chambre de mélange 13.

Le corps de mélange 7 comporte en outre un conduit de déversement de lait 24 relié fluidiquement à l'orifice de sortie 14 de la chambre de mélange 13, et configuré pour permettre un déversement de lait chaud et de mousse de lait dans un récipient, tel qu'une tasse, disposée verticalement en dessous du conduit de déversement de lait 24. De façon avantageuse, le conduit de déversement de lait 24 est configuré pour s'étendre radialement par rapport à l'axe central du réservoir de lait 4.

Comme montré plus particulièrement sur la figure 4 et 7, le dispositif de moussage de lait 2 comporte un joint d'étanchéité 25 s'étendant autour de la chambre de mélange 13, du conduit d'écoulement principal 15 et du canal d'admission d'air 23. A cet effet, le corps de mélange 7 comporte une rainure de réception 26 ménagée dans la face supérieure 8 du corps de mélange 7 et dans laquelle est logé le joint d'étanchéité 25.

Selon le mode de réalisation représenté sur les figures, le joint d'étanchéité 25 comporte un corps de joint 25.1 logé intégralement dans la rainure de réception 26, et une lèvre d'étanchéité 25.2 s'étendant le long du corps de joint 25.1 et faisant saillie hors de la rainure de réception 26. De façon avantageuse, le joint d'étanchéité 25 est continu et peut par exemple présenter une section constante.

Le dispositif de moussage de lait 2 comporte de plus une partie de fermeture 27 configurée pour recouvrir le corps de mélange 7 et pour prendre appui contre le corps de mélange 7. Le corps de mélange 7 peut éventuellement comporter une paroi d'appui 7.1 qui s'étend autour de la chambre de mélange 13 et du conduit d'écoulement principal 15 et qui délimite intérieurement la rainure de réception 26, la paroi d'appui 7.1 faisant saillie de la face supérieure 8 du corps de mélange 7 et la partie de fermeture 27 étant alors configurée pour prendre appui contre un bord supérieur de la paroi d'appui 7.1.

Comme montré sur la figure 3, la partie de fermeture 27 est globalement plane, et le joint d'étanchéité 25 est ainsi agencé à une zone de jonction entre la partie de mélange 6 et la partie de fermeture 27 qui est globalement plane. Selon le mode de réalisation représenté sur les figures, la partie de mélange 6 et la partie de fermeture 27 sont globalement circulaire et s'étendent sensiblement coaxialement avec l'axe central du réservoir de lait 4.

La partie de mélange 6 et la partie de fermeture 27 sont configurées pour fermer le réservoir de lait 4 et pour être amovibles par rapport au réservoir de lait 4. La partie de mélange 6 et la partie de fermeture 27 forment ainsi un couvercle configuré pour fermer le réservoir de lait 4.

Selon le mode de réalisation représenté sur les figures, la partie de fermeture 27 comporte une ouverture de remplissage 28 configurée pour être située en regard d'une ouverture de passage 29 prévue sur le corps de mélange 7 et débouchant dans le réservoir de lait 4, et un volet 31 mobile, et par exemple monté pivotant, entre une position ouverte dans laquelle le volet 31 libère au moins partiellement l'ouverture de remplissage 28 et autorise une introduction de lait dans le réservoir de lait 4 et une position fermée dans laquelle le volet 31 obture au moins partiellement l'ouverture de remplissage 28.

La partie de fermeture 27 est plus particulièrement montée mobile par rapport à la partie de mélange 6 entre une position de fermeture dans laquelle la partie de fermeture 27 ferme la chambre de mélange 13, le conduit d'écoulement principal 15 et le canal d'admission d'air 23, et une position d'ouverture dans laquelle la chambre de mélange 13, le conduit d'écoulement principal 15 et le canal d'admission d'air 23 sont ouverts et accessibles pour être nettoyés.

De façon avantageuse, le dispositif de moussage de lait 2 comporte également un système de maintien 32 configuré pour maintenir la partie de fermeture 27 en position de fermeture et pour assurer une compression du joint d'étanchéité 25 lorsque la partie de fermeture 27 est en position de fermeture. Le système de maintien 32 est plus particulièrement configuré pour plaquer la partie de fermeture 27 contre la face supérieure 8 du corps de mélange 7 lorsque la partie de fermeture 27 est en position de fermeture, de manière à comprimer le joint d'étanchéité 25, et plus particulièrement la lèvre d'étanchéité 25.2 du joint d'étanchéité 25. Selon le mode de réalisation représenté sur les figures, le système de maintien 32 est également configuré pour fixer de manière amovible, c'est-à-dire de manière temporaire et réversible, la partie de mélange 6 et la partie de fermeture 27 au réservoir de lait 4. Cependant, une telle fixation de la partie de mélange 6 et de la partie de fermeture 27 au réservoir de lait 4 pourrait être réalisé par un dispositif de liaison distinct du système de maintien 32.

Comme montré sur la figure 3, le système de maintien 32 comporte une partie de verrouillage 33, tel qu'une bague de verrouillage, montée mobile en rotation par rapport à la partie de fermeture 27 autour d'un axe de rotation A et entre une position de libération dans laquelle la partie de verrouillage 33 autorise un déplacement de la partie de fermeture 27 vers la position d'ouverture et une position de verrouillage dans laquelle la partie de verrouillage 33 empêche un déplacement de la partie de fermeture 27 vers la position d'ouverture. L'axe de rotation A est avantageusement sensiblement parallèle à, et par exemple colinéaire avec, l'axe central du réservoir de lait 4 lorsque la partie de mélange 6 est reçue dans le réservoir de lait 4 et que la partie de fermeture 27 occupe la position de fermeture.

Selon le mode de réalisation représenté sur les figures, la partie de fermeture 27 est configurée pour occuper une position intermédiaire située entre la position de fermeture et la position d'ouverture et dans laquelle la partie de fermeture 27 repose sur la lèvre d'étanchéité 25.2 du joint d'étanchéité 25 et est donc située en regard de la chambre de mélange 13 et du conduit d'écoulement principal 15 et est espacée de la partie de mélange 6, et le système de maintien 32 est configuré pour déplacer la partie de fermeture 27 de la position intermédiaire à la position de fermeture et en direction de la partie de mélange 6, et donc pour rapprocher la partie de fermeture 27 de la partie de mélange 6, lorsque la partie de verrouillage 33 est déplacée de la position de libération vers la position de verrouillage.

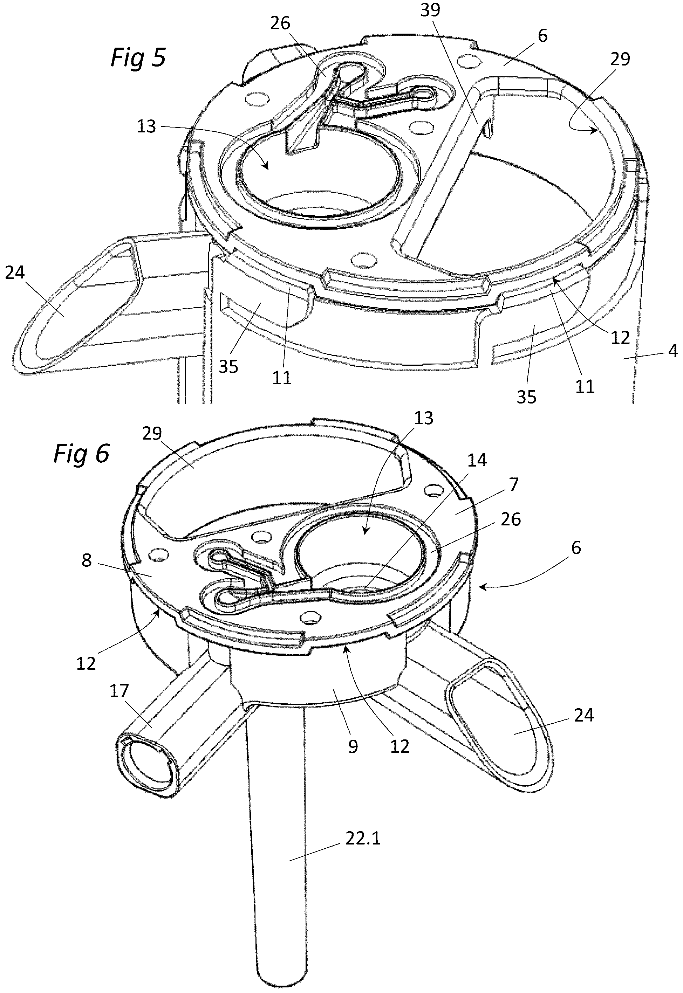

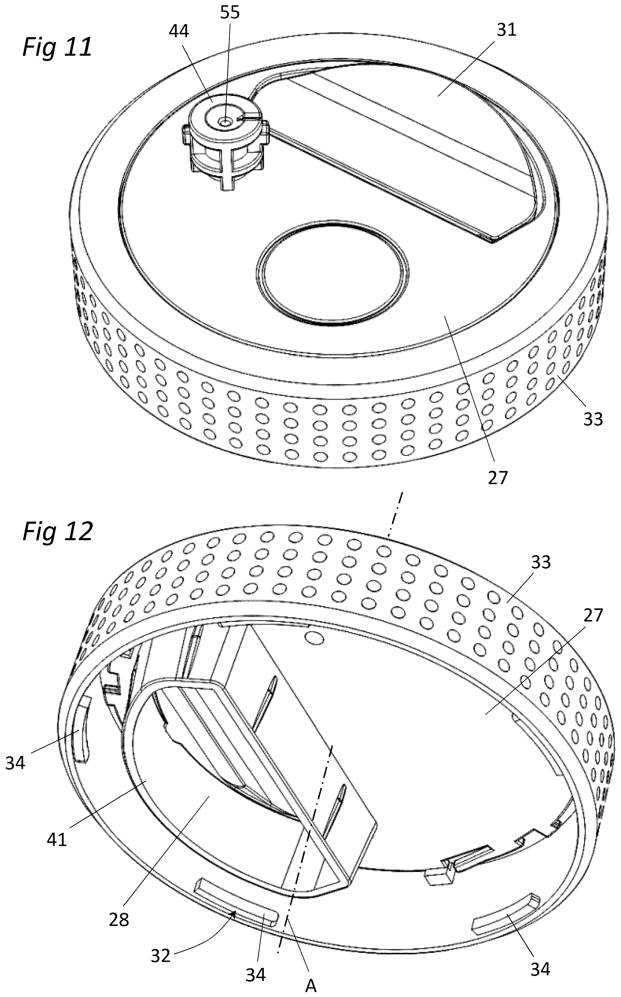

Comme montré sur les figures 5 et 12, le système de maintien 32 comporte en outre une pluralité d'organes de fixation 34, tels que des rampes de fixation ou rainures de fixation, prévus sur la partie de verrouillage 33 et répartis autour de l'axe de rotation A, et une pluralité d'éléments de fixation 35, tels que des ergots de fixation ou des encoches de fixation, prévus sur le réservoir de lait 4 et répartis autour de l'axe central du réservoir de lait 4. Les éléments de fixation 35 sont configurés pour coopérer respectivement avec les organes de fixation 34 prévus sur la partie de verrouillage 33 lors d'une rotation de la partie de verrouillage 33 de la position de libération vers la position de verrouillage, de manière à déplacer la partie de verrouillage 33 en direction de la partie de mélange 6. Les organes de fixation 34 et les éléments de fixation 35 peuvent par exemple former un système de fixation par baïonnettes ou du type vis-écrou. Selon le mode de réalisation représenté sur les figures, les organes de fixation 34 sont prévus sur une surface interne de la partie de verrouillage 33, et les éléments de fixation 35 sont prévus sur une surface externe du réservoir de lait 4.

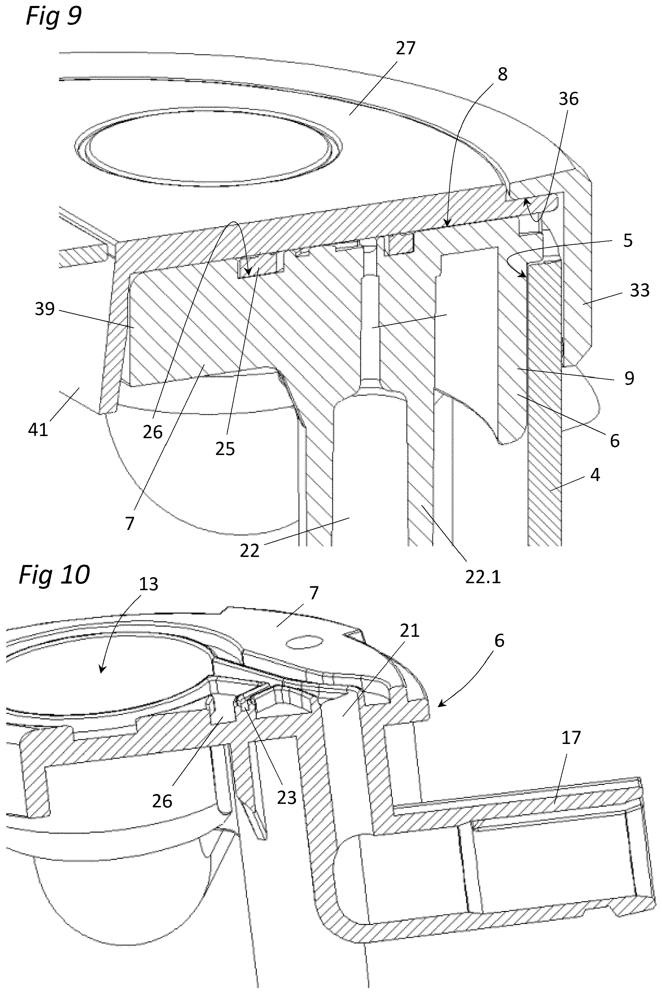

De façon avantageuse, la partie de verrouillage 33 comporte une face d'appui 36 (voir notamment la figure 9) qui s'étend transversalement à l'axe de rotation A et qui est configurée pour déplacer la partie de fermeture 27 vers la partie de mélange 6 et parallèlement à l'axe de rotation A lors d'une rotation de la partie de verrouillage 33 de la position de libération vers la position de verrouillage. La face d'appui 36 est plus particulièrement configurée pour glisser sur la partie de fermeture 27 lors d'une rotation de la partie de verrouillage 33 entre la position de libération et la position de verrouillage. La face d'appui 36 est annulaire et est configurée pour prend appui contre un bord périphérique de la partie de fermeture 27.

Selon le mode de réalisation représenté sur les figures, la partie de verrouillage 33 est montée de manière imperdable sur la partie de fermeture 27, de telle sorte que la partie de verrouillage 33 et la partie de fermeture 27 forment un sous ensemble indémontable.

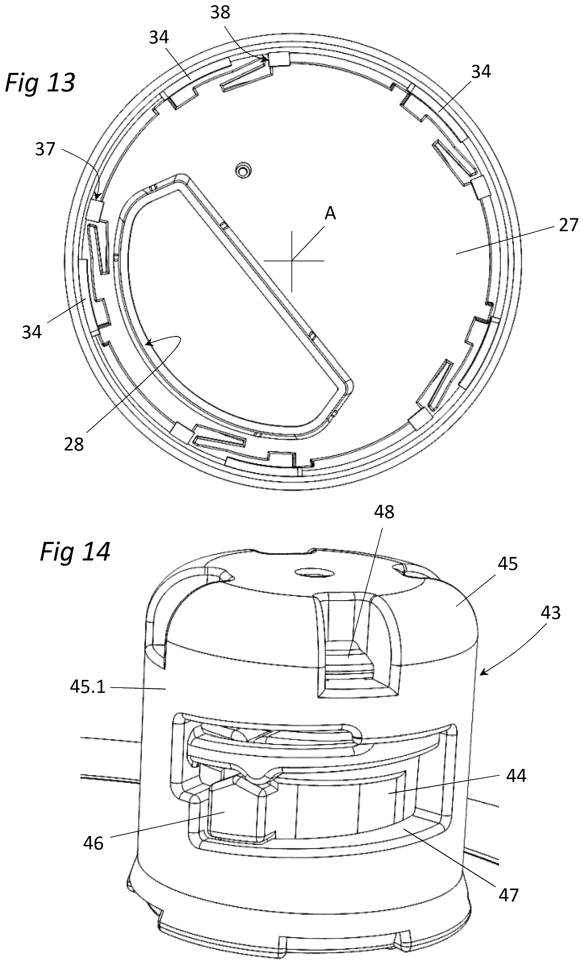

Comme montré plus particulièrement sur la figure 13, le dispositif de moussage de lait 2 comporte un dispositif de limitation de course angulaire configuré pour limiter une course angulaire de la partie de verrouillage 33 par rapport à la partie de fermeture 27. Le dispositif de limitation de course angulaire peut par exemple comporter une ou plusieurs première(s) butée(s) de fin course 37 prévue(s) sur la partie de verrouillage 33 et configurée(s) pour empêcher une rotation de la partie de verrouillage 33, dans un premier sens de rotation, au-delà de la position de libération, et une ou plusieurs deuxième(s) butée(s) de fin de course 38 prévue(s) sur la partie de verrouillage 33 et configurée(s) pour empêcher une rotation de la partie de verrouillage 33, dans un deuxième sens de rotation, au-delà de la position de verrouillage.

De façon avantageuse, le système de maintien 32 est également configuré pour conférer à la partie de fermeture 27 qu'un seul degré de liberté en translation selon une direction de translation D1, qui est par exemple perpendiculaire à la zone de jonction et donc parallèle à l'axe de rotation A, lorsque la partie de fermeture 27 est déplacée entre la position intermédiaire et la position de fermeture. A cet effet, le système de maintien 32 comporte un premier organe de guidage 39, tel qu'un organe de guidage en creux, et un deuxième organe de guidage 41, tel qu'un organe de guidage saillant, solidaires respectivement de la partie de mélange 6 et de la partie de fermeture 27 et configurés pour être montés coulissants l'un dans l'autre selon la direction de translation D1.

Les premier et deuxième organes de guidage 39, 41 présentent des sections transversales complémentaires et non circulaires, et sont configurés pour guider en translation la partie de fermeture 27 par rapport à la partie de mélange 6 et selon la direction de translation D1 lorsque la partie de fermeture 27 est déplacée entre la position intermédiaire et la position de fermeture. Selon le mode de réalisation représenté sur les figures, le premier organe de guidage 39 délimite l'ouverture de passage 29 prévue sur le corps de mélange 7, et le deuxième organe de guidage 41 fait saillie vers le bas depuis une face inférieure de la partie de fermeture 27 et est configuré pour être introduit dans l'ouverture de passage 29. Toutefois, selon une variante de réalisation de l'invention, les premier et deuxième organes de guidage 39, 41 pourraient être décalés latéralement par rapport à l'ouverture de remplissage 28 et l'ouverture de passage 29.

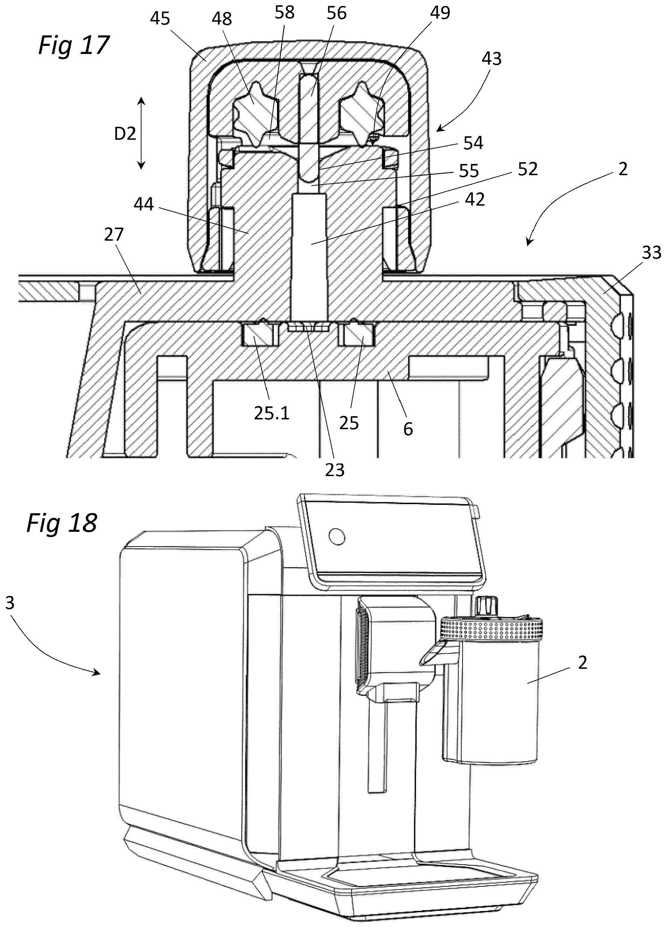

Comme montré plus particulièrement sur la figure 17, la partie de fermeture 27 comporte en outre un conduit d'amenée d'air 42 relié au conduit d'écoulement principal 15 via le canal d'admission d'air 23, et un dispositif de réglage de débit d'air 43 configuré pour régler un débit d'air s'écoulant dans le conduit d'amenée d'air 42. Cependant, selon une variante de réalisation de l'invention, la partie de mélange 6 pourrait être dépourvue du canal d'admission d'air 23, et le conduit d'amenée d'air 42 pourrait être relié directement au conduit d'écoulement principal 15.

Selon le mode de réalisation représenté sur les figures, le dispositif de réglage de débit d'air 43 comporte une partie de support 44 fixée à la partie de fermeture 27 et faisant saillie d'une face supérieure de la partie de fermeture 27, et un organe de réglage de débit 45, tel qu'un bouton de réglage de débit, supporté par la partie de support 44 et monté mobile, et par exemple monté mobile selon un mouvement hélicoïdal, par rapport à la partie de support 44 selon une direction de déplacement D2 qui peut par exemple être sensiblement verticale lorsque le dispositif de moussage de lait 2 repose sur une surface horizontale.

L'organe de réglage de débit 45 et la partie de support 44 peuvent par exemple s'étendre coaxialement l'un par rapport à l'autre, et la partie de support 44 peut par exemple comporter deux doigts de guidage 46 (voir la notamment figure 14) diamétralement opposés et montés coulissants respectivement dans deux rainures de guidage hélicoïdales 47 prévues sur l'organe de réglage de débit 45.

Selon le mode de réalisation représenté sur les figures, l'organe de réglage de débit 45 comporte une partie de réglage 45.1 qui est configurée pour coiffer la partie de support 44 et qui comporte une paroi supérieure recouvrant la partie de support 44 et une paroi périphérique ayant une forme globalement tubulaire et s'étendant autour de la partie de support 44. Comme montré plus particulièrement sur la figure 1, l'organe de réglage de débit 45 comporte en outre une partie de manipulation 45.2 solidaire de la partie de réglage 45.1 et configurée pour être manipulée par un utilisateur de manière à déplacer l'organe de réglage de débit 45 selon la direction de déplacement D2.

L'organe de réglage de débit 45 est configuré pour occuper une pluralité de positions de réglage décalées les unes des autres selon la direction de déplacement D2. De façon avantageuse, la direction de déplacement D2 est sensiblement parallèle à l'axe central du réservoir de lait 4 lorsque la partie de mélange 6 est reçue dans le réservoir de lait 4 et que la partie de fermeture 27 est en position de fermeture.

Le dispositif de réglage de débit d'air 43 comporte en outre un élément d'étanchéité 48 qui est annulaire et qui est fixé à l'organe de réglage de débit 45. Selon le mode de réalisation représenté sur les figures, la partie de support 44 comporte une surface d'appui 49, prévue sur une face d'extrémité supérieure de la partie de support 44, qui est annulaire et contre laquelle est apte à être comprimé l'élément d'étanchéité 48 en fonction de la position occupée par l'organe de réglage de débit 45.

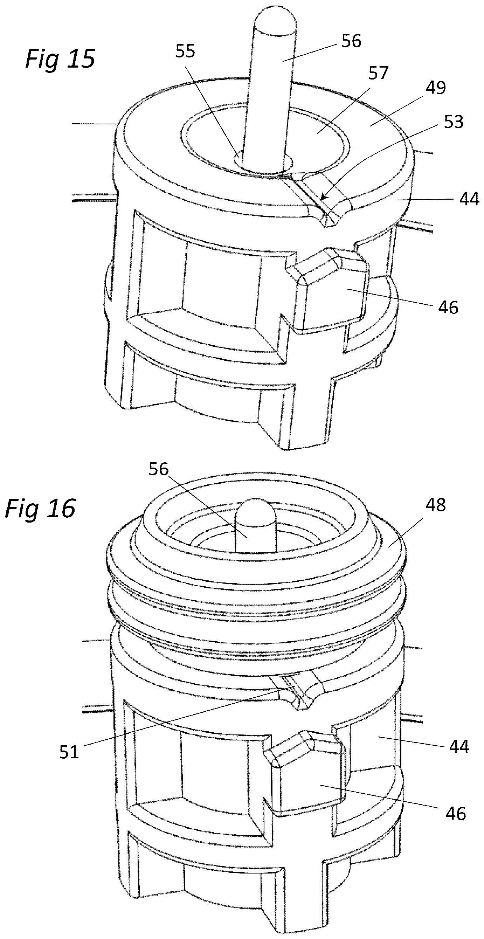

L'élément d'étanchéité 48 et la partie de support 44 sont configurés pour délimiter un passage d'écoulement d'air 51 (voir la figure 16) ayant une section de passage qui varie en fonction de la position occupée par l'organe de réglage de débit 45. Le passage d'écoulement d'air 51 est plus particulièrement configuré pour relier fluidiquement une ouverture d'admission d'air 52, définie par le dispositif de réglage de débit d'air 43, au conduit d'amenée d'air 42. Selon le mode de réalisation représenté sur les figures, l'ouverture d'admission d'air 52 est définie par un jeu fonctionnel entre l'organe de réglage de débit 45 et la partie de support 44.

L'organe de réglage de débit 45 est plus particulièrement déplaçable entre une position de réglage maximale dans laquelle la section de passage du passage d'écoulement d'air 51 est maximale, et une position de réglage minimale dans laquelle la section de passage du passage d'écoulement d'air 51 est minimale, et par exemple nulle ou sensiblement nulle.

Comme montré sur la figure 15, la partie de support 44 comporte un évidement 53 qui est ménagé dans la surface d'appui 49 et qui délimite en partie le passage d'écoulement d'air 51. L'évidement 53 peut par exemple s'étendre radialement par rapport à la direction de déplacement D2, et présenter une section transversale globalement en forme de V.

Comme montré plus particulièrement sur la figure 17, le conduit d'amenée d'air 42 comprend un passage d'air calibré 54 qui est situé en aval de l'organe de réglage de débit 45 et qui est configuré pour définir un débit d'air maximal dans le conduit d'amenée d'air 42.

Selon le mode de réalisation représenté sur les figures, la partie de support 44 comporte un trou d'insertion 55, qui peut par exemple présenter un diamètre supérieur à un millimètre et de préférence supérieur à 1,5 millimètres, orienté sensiblement parallèlement à la direction de déplacement D2, et le dispositif de réglage de débit d'air 43 comporte un organe de restriction de passage 56, tel qu'une goupille ou un pointeau de forme globalement cylindrique, ayant une portion d'extrémité inférieure qui logée dans le trou d'insertion 55. L'organe de restriction de passage 56 est solidaire en mouvement de l'organe de réglage de débit 45, et est donc monté mobile dans le trou d'insertion 55 selon la direction de déplacement D2. L'organe de restriction de passage 56 est allongé et s'étend selon une direction d'extension qui est parallèle à la direction de déplacement D2. Le trou d'insertion 55 et l'organe de restriction de passage 56 délimitent plus particulièrement le passage d'air calibré 54, de telle sorte que le passage d'air calibré 54 est annulaire.

Selon le mode de réalisation représenté sur les figures, la partie de support 44 comporte une cavité 57 qui débouche dans la face d'extrémité supérieure de la partie de support 44 et dans laquelle débouche le trou d'insertion 55. La cavité 57 et l'organe de réglage de débit 45 délimitent une chambre interne 58 configurée pour relier fluidiquement le passage d'écoulement d'air 51 au trou d'insertion 55.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention telle que définie par les revendications.

## Revendications

1. Dispositif de moussage de lait (2) destiné à coopérer avec une machine à café automatique (3), le dispositif de moussage de lait (2) comportant :
- une partie de mélange (6) comprenant une chambre de mélange (13) munie d'un orifice de sortie (14), un orifice d'entrée d'eau chaude/vapeur (21) et un conduit d'écoulement principal (15) reliant l'orifice d'entrée d'eau chaude/vapeur (21) à la chambre de mélange (13),
- une partie de fermeture (27) mobile par rapport à la partie de mélange (6) entre une position de fermeture dans laquelle la partie de fermeture (27) ferme la chambre de mélange (13) et le conduit d'écoulement principal (15) et une position d'ouverture dans laquelle la chambre de mélange (13) et le conduit d'écoulement principal (15) sont ouverts et accessibles pour être nettoyés,
- un conduit d'amenée de lait (22) relié au conduit d'écoulement principal (15),
- un joint d'étanchéité (25) agencé à une zone de jonction entre la partie de mélange (6) et la partie de fermeture (27) et s'étendant autour de la chambre de mélange (13) et du conduit d'écoulement principal (15), et
- un système de maintien (32) configuré pour maintenir la partie de fermeture (27) en position de fermeture,
la partie de fermeture (27) est configurée pour occuper une position intermédiaire située entre la position de fermeture et la position d'ouverture et dans laquelle la partie de fermeture (27) est située en regard de la chambre de mélange (13) et du conduit d'écoulement principal (15) et est espacée de la partie de mélange (6), **caractérisé en ce que** le système de maintien (32) est configuré pour conférer à la partie de fermeture (27) qu'un seul degré de liberté en translation selon une direction de translation (D1) lorsque la partie de fermeture (27) est déplacée entre la position intermédiaire et la position de fermeture, le système de maintien (32) étant en outre configuré pour assurer une compression du joint d'étanchéité (25) lorsque la partie de fermeture (27) est en position de fermeture.

2. Dispositif de moussage de lait (2) selon la revendication 1, dans lequel le système de maintien (32) comporte un premier organe de guidage (39) et un deuxième organe de guidage (41) solidaires respectivement de la partie de mélange (6) et de la partie de fermeture (27) et configurés pour être montés coulissants l'un dans l'autre, les premier et deuxième organes de guidage (39, 41) étant configurés pour guider en translation la partie de fermeture (27) par rapport à la partie de mélange (6) et selon la direction de translation (D1) lorsque la partie de fermeture (27) est déplacée entre la position intermédiaire et la position de fermeture.

3. Dispositif de moussage de lait (2) selon la revendication 1 ou 2, dans lequel le système de maintien (32) comporte une partie de verrouillage (33) montée mobile entre une position de libération dans laquelle la partie de verrouillage (33) autorise un déplacement de la partie de fermeture (27) vers la position d'ouverture et une position de verrouillage dans laquelle la partie de verrouillage (33) empêche un déplacement de la partie de fermeture (27) vers la position d'ouverture.

4. Dispositif de moussage de lait (2) selon la revendication 3, dans lequel le système de maintien (32) est configuré pour déplacer la partie de fermeture (27) de la position intermédiaire à la position de fermeture et en direction de la partie de mélange (6) selon la direction de translation (D1) lorsque la partie de verrouillage (33) est déplacée de la position de libération vers la position de verrouillage.

5. Dispositif de moussage de lait (2) selon la revendication 3 ou 4, dans lequel la partie de verrouillage (33) est annulaire et est mobile en rotation par rapport à la partie de fermeture (27) autour d'un axe de rotation (A) et entre la position de libération et la position de verrouillage, l'axe de rotation (A) étant configuré pour être sensiblement parallèle à la direction de translation (D1) lorsque la partie de fermeture (27) occupe la position intermédiaire.

6. Dispositif de moussage de lait (2) selon la revendication 5, dans lequel la partie de verrouillage (33) comporte au moins un organe de fixation (34) configuré pour coopérer avec au moins un élément de fixation (35) configuré pour être solidaire en rotation de la partie de mélange (6), l'au moins un organe de fixation (34) étant configuré pour coopérer avec l'au moins un élément de fixation (35) lors d'une rotation de la partie de verrouillage (33) de la position de libération vers la position de verrouillage de manière à déplacer la partie de verrouillage (33) selon la direction de translation (D1) et en direction de la partie de mélange (6), la partie de verrouillage (33) étant configurée pour déplacer la partie de fermeture (27) vers la partie de mélange (6) et selon la direction de translation (D1) lors d'une rotation de la partie de verrouillage (33) de la position de libération vers la position de verrouillage.

7. Dispositif de moussage de lait (2) selon la revendication 6, dans lequel la partie de verrouillage (33) comporte une face d'appui (36) qui s'étend transversalement à la direction de translation (D1), ladite face d'appui (36) étant configurée pour déplacer la partie de fermeture (27) vers la partie de mélange (6) et selon la direction de translation (D1) lors d'une rotation de la partie de verrouillage (33) de la position de libération vers la position de verrouillage.

8. Dispositif de moussage de lait (2) selon l'une quelconque des revendications 3 à 7, dans lequel la partie de verrouillage (33) et la partie de fermeture (27) forment un sous ensemble.

9. Dispositif de moussage de lait (2) selon l'une quelconque des revendications 1 à 8, dans lequel la zone de jonction est plane, et la direction de translation (D1) est sensiblement perpendiculaire à la zone de jonction.

10. Dispositif de moussage de lait (2) selon l'une quelconque des revendications 1 à 9, dans lequel le conduit d'écoulement principal (15) comporte une restriction de section (16) formant un système d'aspiration de lait et d'air basé sur l'effet venturi.

11. Dispositif de moussage de lait (2) selon l'une quelconque des revendications 1 à 10, dans lequel la chambre de mélange (13) est du type cyclonique et s'étend verticalement, le conduit d'écoulement principal (15) débouchant dans une partie supérieure de la chambre de mélange (13) et l'orifice de sortie (14) étant situé dans une partie inférieure de la chambre de mélange (13).

12. Dispositif de moussage de lait (2) selon l'une quelconque des revendications 1 à **11,** lequel comporte un réservoir de lait (4) comprenant une ouverture supérieure (5), la partie de mélange (6) étant agencée au niveau de l'ouverture supérieure (5).

13. Dispositif de moussage de lait (2) selon la revendication 12, dans lequel le système de maintien (32) est configuré pour fixer de manière amovible la partie de mélange (6) et la partie de fermeture (27) au réservoir de lait (4).

14. Dispositif de moussage de lait (2) selon la revendication 12 ou 13, dans lequel la partie de mélange (6) et la partie de fermeture (27) sont configurées pour fermer le réservoir de lait (4) et pour être amovibles par rapport au réservoir de lait (4).

15. Dispositif de moussage de lait (2) selon l'une quelconque des revendications 12 à **14,** dans lequel la partie de fermeture (27) comporte une ouverture de remplissage (28) et un volet (31) mobile entre une position ouverte dans laquelle le volet (31) libère au moins partiellement l'ouverture de remplissage (28) et autorise une introduction de lait dans le réservoir de lait (4) et une position fermée dans laquelle le volet (31) obture au moins partiellement l'ouverture de remplissage (28).

16. Machine à café automatique (3) comportant un embout de sortie d'eau chaude/vapeur, une chaudière produisant de l'eau chaude et/ou de la vapeur pour alimenter ledit embout de sortie d'eau chaude/vapeur, et un dispositif de moussage de lait (2) conforme à l'une quelconque des revendications 1 à 15, l'orifice d'entrée d'eau chaude/vapeur (21) du dispositif de moussage de lait (2) étant relié à l'embout de sortie d'eau chaude/vapeur.

## Patentansprüche

1. Milchaufschäumvorrichtung (2) zur Zusammenarbeit mit einer automatischen Kaffeemaschine (3), die Milchaufschäumvorrichtung (2) umfassend:
- ein Mischteil (6), das eine Mischkammer (13) mit einer Auslassöffnung (14), einer Heißwasser-/Dampfeinlassöffnung (21) und einer Hauptablaufleitung (15) umfasst, die die Heißwasser-/Dampfeinlassöffnung (21) mit der Mischkammer (13) verbindet,
- ein gegenüber dem Mischteil (6) bewegliches Verschlussteil (27) zwischen einer Verschlussstellung, in der das Verschlussteil (27) die Mischkammer (13) und die Hauptablaufleitung (15) schließt, und einer Öffnungsstellung, in der die Mischkammer (13) und die Hauptablaufleitung (15) geöffnet und zur Reinigung zugänglich sind,
- einen Milchzulaufkanal (22), der mit der Hauptablaufleitung (15) verbunden ist,
- eine Dichtung (25), die an einem Übergangsbereich zwischen dem Mischteil (6) und dem Verschlussteil (27) angeordnet ist und sich um die Mischkammer (13) und die Hauptablaufleitung (15) erstreckt, und
- ein Haltesystem (32), das so eingerichtet ist, dass es das Verschlussteil (27) in der Verschlussstellung hält,
das Verschlussteil (27) so eingerichtet ist, dass es eine Zwischenstellung zwischen der Verschlussstellung und der Öffnungsstellung einnimmt, und wobei das Verschlussteil (27) gegenüber der Mischkammer (13) und der Hauptablaufleitung (15) liegt und von dem Mischteil (6) abgesetzt ist,
dadurch charakterisiert,
dass das Haltesystem (32) so eingerichtet ist, dass es dem Verschlussteil (27) nur einen einzigen Translationsfreiheitsgrad in einer Translationsrichtung (D1) verleiht, wenn das Verschlussteil (27) zwischen der Zwischenstellung und der Verschlussstellung bewegt wird, wobei das Haltesystem (32) ferner so eingerichtet ist, dass es eine Kompression der Dichtung (25) sicherstellt, wenn sich das Verschlussteil (27) in der Verschlussstellung befindet.

2. Milchaufschäumvorrichtung (2) nach Anspruch 1, wobei das Haltesystem (32) ein erstes Führungselement (39) und ein zweites Führungselement (41) umfasst, die jeweils fest mit dem Mischteil (6) und dem Verschlussteil (27) verbunden sind und so eingerichtet sind, dass sie ineinander gleitend montiert sind, wobei das erste und das zweite Führungselement (39, 41) so eingerichtet sind, dass sie den Verschlussteil (27) in Translation gegenüber dem Mischteil (6) führen und je nach Translationsrichtung (D1), wenn das Verschlussteil (27) zwischen der Zwischenstellung und der Verschlussstellung bewegt wird.

3. Milchaufschäumvorrichtung (2) nach Anspruch 1 oder 2, wobei das Haltesystem (32) ein Verriegelungsteil (33) aufweist, das beweglich zwischen einer Freigabestellung, in der das Verriegelungsteil (33) eine Bewegung des Verschlussteils (27) in die Öffnungsstellung zulässt, und einer Verriegelungsstellung, in der das Verriegelungsteil (33) eine Bewegung des Verschlussteils (27) in die Öffnungsstellung verhindert, montiert ist.

4. Milchaufschäumvorrichtung (2) nach Anspruch 3, wobei das Haltesystem (32) so eingerichtet ist, dass es das Verschlussteil (27) von der Zwischenstellung in die Verschlussstellung und in Richtung des Mischteils (6) gemäß der Translationsrichtung (D1) bewegt, wenn das Verriegelungsteil (33) von der Freigabestellung in die Verriegelungsstellung bewegt wird.

5. Milchaufschäumvorrichtung (2) nach Anspruch 3 oder 4, wobei das Verriegelungsteil (33) ringförmig ist und in Bezug auf das Verschlussteil (27) um eine Drehachse (A) und zwischen der Freigabestellung und der Verriegelungsstellung drehbar ist, wobei die Drehachse (A) so eingerichtet ist, dass sie im Wesentlichen parallel zur Translationsrichtung (D1) verläuft, wenn das Verschlussteil (27) die Zwischenstellung einnimmt.

6. Milchaufschäumvorrichtung (2) nach Anspruch 5, wobei das Verriegelungsteil (33) mindestens ein Befestigungsorgan (34) umfasst, das so eingerichtet ist, dass es mit mindestens einem Befestigungselement (35) zusammenarbeitet, das so eingerichtet ist, dass es drehfest mit dem Mischteil (6) verbunden ist, wobei das mindestens eine Befestigungsorgan (34) so eingerichtet ist, dass es mit dem mindestens einen Befestigungselement (35) bei einer Drehung des Verriegelungsteils (33) zusammenarbeitet von der Freigabestellung in die Verriegelungsstellung, so dass das Verriegelungsteil (33) in Translationsrichtung (D1) und Richtung des Mischteils (6) bewegt wird, wobei der Verriegelungsteil (33) so eingerichtet ist, dass er den Verschlussteil (27) in Richtung des Mischteils (6) und in Translationsrichtung (D1) bewegt, wenn der Verriegelungsteil (33) von der Freigabestellung in die Verriegelungsstellung gedreht wird.

7. Milchaufschäumvorrichtung (2) nach Anspruch 6, wobei der Verriegelungsteil (33) eine Auflagefläche (36) aufweist, die sich quer zur Translationsrichtung (D1) erstreckt, wobei die Auflagefläche (36) so eingerichtet ist, dass sie das Verschlussteil (27) in Richtung des Mischteils (6) und in Richtung der Translationsrichtung (D1) bewegt, wenn das Verriegelungsteil (33) von der Freigabestellung in die Verriegelungsstellung gedreht wird.

8. Milchaufschäumvorrichtung (2) nach einem der Ansprüche 3 bis 7, wobei das Verriegelungsteil (33) und das Verschlussteil (27) eine Untereinheit bilden.

9. Milchaufschäumvorrichtung (2) nach einem der Ansprüche 1 bis 8, wobei der Verbindungsbereich eben ist und die Translationsrichtung (D1) im Wesentlichen senkrecht zum Verbindungsbereich ist.

10. Milchaufschäumvorrichtung (2) nach einem der Ansprüche 1 bis 9, wobei die Hauptablaufleitung (15) eine Querschnittsbeschränkung (16) aufweist, die ein auf dem Venturi-Effekt basierendes Milch- und Luftansaugsystem bildet.

11. Milchaufschäumvorrichtung (2) nach einem der Ansprüche 1 bis 10, wobei die Mischkammer (13) Zyklontyp ist und sich vertikal erstreckt, wobei die Hauptablaufleitung (15) in einen oberen Teil der Mischkammer (13) mündet und die Auslassöffnung (14) sich in einem unteren Teil der Mischkammer (13) befindet.

12. Milchaufschäumvorrichtung (2) nach einem der Ansprüche 1 bis **11,** die einen Milchbehälter (4) mit einer oberen Öffnung (5) aufweist, wobei das Mischteil (6) an der oberen Öffnung (5) angeordnet ist.

13. Milchaufschäumvorrichtung (2) nach Anspruch 12, wobei das Haltesystem (32) dazu eingerichtet ist, das Mischteil (6) und das Verschlussteil (27) beweglich am Milchbehälter (4) zu befestigen.

14. Milchaufschäumvorrichtung (2) nach Anspruch 12 oder 13, wobei das Mischteil (6) und das Verschlussteil (27) zum Verschließen des Milchbehälters (4) ausgebildet sind und in Bezug auf den Milchbehälter (4) beweglich sind.

15. Milchaufschäumvorrichtung (2) nach einem der Ansprüche 12 bis 14, wobei das Verschlussteil (27) eine Füllöffnung (28) und eine Klappe (31) aufweist, die zwischen einer offenen Stellung, in der die Klappe (31) die Füllöffnung (28) mindestens teilweise freigibt und das Einbringen von Milch in den Milchbehälter (4) zulässt, und einer geschlossenen Stellung, in der die Klappe (31) die Füllöffnung (28) mindestens teilweise verschließt, beweglich ist.

16. Automatische Kaffeemaschine (3) mit einem Heißwasser-/Dampfauslassstutzen, einem Kessel zur Erzeugung von Heißwasser und/oder Dampf zur Versorgung des Heißwasser-/Dampfauslassstutzens und einer Milchaufschäumvorrichtung (2) nach einem der Ansprüche 1 bis 15, wobei die Heißwasser-/Dampfeinlassöffnung (21) der Milchaufschäumvorrichtung (2) mit dem Heißwasser-/Dampfauslassstutzen verbunden ist.

## Claims

1. A milk frothing device (2) intended to cooperate with an automatic coffee machine (3), the milk frothing device (2) including:
- a mixing part (6) comprising a mixing chamber (13) provided with an outlet orifice (14), a hot water/vapor inlet orifice (21) and a main flow conduit (15) connecting the hot water/vapor inlet orifice (21) to the mixing chamber (13),
- a closure part (27) movable relative to the mixing part (6) between a closed position in which the closure part (27) closes the mixing chamber (13) and the main flow conduit (15) and an open position in which the mixing chamber (13) and the main flow conduit (15) are open and accessible for cleaning,
- a milk supply conduit (22) connected to the main flow conduit (15),
- a seal (25) arranged at a junction area between the mixing part (6) and the closure part (27) and extending around the mixing chamber (13) and the main flow conduit (15), and
- a holding system (32) configured to hold the closure part (27) in the closed position,
the closure part (27) is configured to occupy an intermediate position located between the closed position and the open position and in which the closure part (27) is located opposite the mixing chamber (13) and the main flow conduit (15) and is spaced apart from the mixing part (6),
**characterized in that** the holding system (32) is configured to confer on the closure part (27) only one translational degree of freedom in a direction of translation (D1) when the closure part (27) is displaced between the intermediate position and the closed position, the holding system (32) being further configured to ensure a compression of the seal (25) when the closure part (27) is in the closed position.

2. The milk frothing device (2) according to claim 1, wherein the holding system (32) includes a first guide member (39) and a second guide member (41) secured respectively to the mixing part (6) and the closure part (27) and configured to be slidably mounted one inside the other, the first and second guide members (39, 41) being configured to guide the closure part (27) in translation relative to the mixing part (6) and in the direction of translation (D1) when the closure part (27) is displaced between the intermediate position and the closed position.

3. The milk frothing device (2) according to claim 1 or 2, wherein the holding system (32) includes a locking part (33) movably mounted between a release position in which the locking part (33) enables a displacement of the closure part (27) towards the open position and a locking position in which the locking part (33) prevents a displacement of the closure part (27) towards the open position.

4. The milk frothing device (2) according to claim 3, wherein the holding system (32) is configured to displace the closure part (27) from the intermediate position to the closed position and in the direction of the mixing part (6) in the direction of translation (D1) when the locking part (33) is displaced from the release position to the locking position.

5. The milk frothing device (2) according to claim 3 or 4, wherein the locking part (33) is annular and is movable in rotation relative to the closure part (27) about an axis of rotation (A) and between the release position and the locking position, the axis of rotation (A) being configured to be substantially parallel to the direction of translation (D1) when the closure part (27) occupies the intermediate position.

6. The milk frothing device (2) according to claim 5, wherein the locking part (33) includes at least one fastening member (34) configured to cooperate with at least one fastening element (35) configured to be secured in rotation to the mixing part (6), the at least one fastening member (34) being configured to cooperate with the at least one fastening element (35) during a rotation of the locking part (33) from the release position to the locking position so as to displace the locking part (33) in the direction of translation (D1) and towards the mixing part (6), the locking part ( 33) being configured to displace the closure part (27) towards the mixing part (6) and in the direction of translation (D1) during a rotation of the locking part (33) from the release position to the locking position.

7. The milk frothing device (2) according to claim 6, wherein the locking part (33) includes a bearing face (36) which extends transversely to the direction of translation (D1), said bearing face (36) being configured to displace the closure part (27) towards the mixing part (6) and in the direction of translation (D1) during a rotation of the locking part (33) from the release position to the locking position.

8. The milk frothing device (2) according to any one of claims 3 to 7, wherein the locking part (33) and the closure part (27) form a subset.

9. The milk frothing device (2) according to any one of claims 1 to 8, wherein the junction area is planar, and the direction of translation (D1) is substantially perpendicular to the junction area.

10. The milk frothing device (2) according to any one of claims 1 to 9, wherein the main flow conduit (15) includes a section restriction (16) forming a milk and air suction system based on the Venturi effect.

11. The milk frothing device (2) according to any one of claims 1 to 10, wherein the mixing chamber (13) is of the cyclonic type and extends vertically, the main flow conduit (15) opening into an upper part of the mixing chamber (13) and the outlet orifice (14) being located in a lower part of the mixing chamber (13).

12. The milk frothing device (2) according to any one of claims 1 to 11, which includes a milk reservoir (4) comprising an upper opening (5), the mixing part (6) being arranged at the upper opening (5).

13. The milk frothing device (2) according to claim 12, wherein the holding system (32) is configured to removably fasten the mixing part (6) and the closure part (27) to the milk reservoir (4).

14. The milk frothing device (2) according to claim 12 or 13, wherein the mixing part (6) and the closure part (27) are configured to close the milk reservoir (4) and to be removable with respect to the milk reservoir (4).

15. The milk frothing device (2) according to any one of claims 12 to 14, wherein the closure part (27) includes a filling opening (28) and a flap (31) movable between an open position in which the flap (31) at least partially releases the filling opening (28) and enables an introduction of milk into the milk reservoir (4) and a closed position in which the flap (31) at least partially seals the filling opening (28).

16. An automatic coffee machine (3) including a hot water/vapor outlet nozzle, a boiler producing hot water and/or vapor to feed said hot water/vapor outlet nozzle, and a milk frothing device (2) according to any one of claims 1 to 15, the hot water/vapor inlet orifice (21) of the milk frothing device (2) being connected to the hot water/vapor outlet nozzle.
